(19) Europäisches Patentamt
European Patent Office
Office européen des brevets

(11) Numéro de publication: **0 335 773 B1**

# (12) FASCICULE DE BREVET EUROPEEN

(45) Date de publication de fascicule du brevet: **31.08.94**

(51) Int. Cl.⁵: **C01G 23/053**, C01G 23/00

(21) Numéro de dépôt: **89400803.6**

(22) Date de dépôt: **22.03.89**

Le dossier contient des informations techniques présentées postérieurement au dépôt de la demande et ne figurant pas dans le présent fascicule.

## (54) Procédé de préparation d'oxyde de titane.

(30) Priorité: **30.03.88 FR 8804169**

(43) Date de publication de la demande:
**04.10.89 Bulletin 89/40**

(45) Mention de la délivrance du brevet:
**31.08.94 Bulletin 94/35**

(84) Etats contractants désignés:
**AT BE CH DE ES FR GB GR IT LI LU NL SE**

(56) Documents cités:
**EP-A- 0 141 696**
**FR-A- 813 757**
**FR-A- 828 741**
**GB-A- 308 725**

(73) Titulaire: **RHONE-POULENC CHIMIE**
**25, quai Paul Doumer**
**F-92408 Courbevoie Cédex (FR)**

(72) Inventeur: **Chopin, Thierry**
**44, rue A. Poullain**
**Résidence du Clos Lendit**
**F-93200 Saint-Denis (FR)**
Inventeur: **Fourre, Patrick**
**27, avenue d'Italie**
**F-75013 Paris (FR)**

(74) Mandataire: **Dubruc, Philippe et al**
**RHONE-POULENC CHIMIE**
**Service Brevets Chimie**
**25, quai Paul-Doumer**
**F-92408 Courbevoie Cédex (FR)**

EP 0 335 773 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a trait à un procédé de préparation d'oxydes de titane $TiO_2$. Plus particulièrement, elle vise à fournir des oxydes de titane exempts de soufre et aisément dispersables dans des solutions aqueuses.

Elle concerne également l'utilisation desdits oxydes pour la synthèse des titanates d'alcalinoterreux de qualité électronique.

On sait que les titanates d'alcalino-terreux (baryum et strontium principalement) pour application électronique (fabrication de condensateurs, résistances, ...) doivent être d'une grande pureté, notamment en ce qui concerne leur teneur en soufre (< 500 ppm).

On connait d'autres part par le brevet français 2 551 743 un procédé de préparation de titanates d'alcalino-terreux constant à mélanger un sol d'oxyde de titanate et une solution de nitrate de l'élément alcalino-terreux, à sécher le mélange obtenu et enfin à calciner le produit séché.

Toutefois, le sol de départ utilisé dans le procédé cité est obtenu par thermohydrolyse d'un oxysulfate de titane $TiOSO_4$, de sorte que même après des lavages successifs et prolongés du sol, des quantités non négligeables de soufre restent encore fixées sur l'oxyde de titane, et par conséquent se trouvent au niveau des poudres finales de titanates.

On connait aussi par les documents FR-A-828741, GB-A-308725 et US-A-2113946, dont les enseignements sont similaires, des procédés dans lesquels on effectue une hydrolyse de composés du titane en présence d'acides organiques ou inorganiques. Toutefois ces documents concernent uniquement la préparation d'oxyde de titane de qualité pigmentaire sous forme rutile et non l'obtention de cet oxyde sous forme anatase.

On sait enfin qu'il est possible de préparer de l'oxyde de titane sans soufre par thermohydrolyse d'une solution d'oxychlorure de titane, mais l'oxyde obtenu se présente essentiellement sous forme rutile, de sorte qu'il ne peut être utilisé pour la préparation de sols stables de $TiO_2$.

La présente invention a donc pour but de résoudre les problèmes ci-dessus en proposant des moyens simples, efficaces, et de mise en oeuvre aisée, qui permettent d'aboutir de manière fiable et reproductible à un oxyde de titane, exempt de soufre, et susceptible d'être utilisé à la préparation de sols stables d'oxyde de titane.

A cet effet, la Demanderesse a mis au point un procédé de préparation d'oxyde de titane, sous forme anatase, du type comprenant l'hydrolyse d'un composé du titane (composé A) puis la récupération dudit oxyde de titane sous forme anatase après séparation du milieu d'hydrolyse et qui est caractérisé en ce que ledit composé du titane est exempt de soufre, ladite hydrolyse est effectuée en présence d'au moins un composé (composé B) choisi parmi :

(i) les acides qui présentent :

- soit un groupement carboxyle et au moins deux groupements hydroxyles et/ou amines
- soit au moins deux groupements carboxyles et au moins un groupement hydroxyle et/ou amine

(ii) les sels des acides cités sous (i) :

et en ce qu'on opère l'hydrolyse avec une concentration molaire en composé B comprise entre 0,002 et 0,5 mole/litre.

La mise en oeuvre du procédé selon l'invention permet alors d'obtenir des oxydes de titane qui, outre le fart d'être exempts de soufre, présentent également l'avantage d'être aisément dispersables dans des solutions aqueuses en donnant des sols parfaitement stables d'oxyde de titane.

Mais d'autres caractéristiques et avantages de l'invention apparaîtront de manière encore plus complète à la lecture de la description qui va suivre et des exemples concrets, mais non limitatifs, relatifs à sa mise en oeuvre.

La première étape du procédé selon l'invention passe donc tout d'abord par la préparation d'une solution contenant au moins un composé A et au moins un composé B tels que précédemment définis.

Cette solution initiale, destinée à être hydrolysée, est de préférence totalement aqueuse : éventuellement il pourrait y être rajouté un autre solvant, un alcool par exemple, à condition bien entendu que les composés A et B utilisés soient alors substantiellement solubles dans ce mélange.

D'autre part, le composé du titane A doit être exempt de soufre, ce qui exclut l'utilisation de sels du type sulfate ou oxysulfate de titane.

Par contre, peuvent convenir pour la mise en oeuvre du procédé selon l'invention, des précurseurs de $TiO_2$ du type notamment halogénure de titane, oxyhalogénure de titane, nitrate de titane ou bien encore alcoxyde de titane.

De préférence, on opèrera avec des composés du titane du type halogénure ou oxyhalogénure de titane. Les halogénures ou les oxyhalogénures de titane plus particulièrement visés dans la présente invention sont les fluorures, les chlorures, les bromures et les iodures (respectivement les oxyfluorures, les oxychlorures, les oxybromures et les oxyiodures) de titane.

Selon un mode particulièrement préféré de réalisation du procédé selon l'invention, on procèdera par hydrolyse des oxyhalogénures de titane, et encore plus particulièrement de l'oxychlorure de titane $TiOCl_2$.

Selon l'invention, la solution initiale doit en outre contenir au moins un composé B tel que défini précédemment, c'est à dire un composé B convenablement choisi dans la classe générale des acides (hydroxy et/ou amino) carboxyliques.

A titre d'exemples non limitatifs de composés B rentrant dans le cadre de la présente invention, on peut citer notamment :

- les acides hydroxypolycarboxyliques, et plus particulièrement les acides hydroxydi- ou hydroxytricarboxyliques, comme par exemple l'acide malique, l'acide citrique et l'acide tartronique
- les acides (polyhydroxy)monocarboxyliques, comme par exemple l'acide glucoheptonique et l'acide gluconique
- les acides poly(hydroxycarboxyliques), comme par exemple l'acide tartrique
- les aminoacides dicarboxyliques et leurs amides correspondantes, comme par exemple l'acide aspartique, l'asparagine et l'acide glutamique
- les aminoacides monocarboxyliques, hydroxylés ou non, comme par exemple la lysine, la sérine et la thréonine.

Comme déjà indiqué, il est également possible d'utiliser à titre de composé B tous les sels des acides précités.

De préférence, ces sels seront soit des sels d'alcalins, et plus particulièrement des sels de sodium, soit des sels d'ammonium.

De préférence, les composés B tels que notamment définis ci-dessus seront des composés hydrocarbonés du type aliphatique.

De préférence enfin, la longueur de la chaine principale hydrocarbonée n'excèdera pas 15 atomes de carbone, et plus préférentiellement 10 atomes de carbone.

La quantité de composé du titane présente dans la solution à hydrolyser n'est pas critique.

Cette dernière est néanmoins généralement telle que la concentration molaire en titane dans ladite solution soit comprise entre environ 0,1 mole/litre et 1,5 mole/litre.

Des concentrations en titane inférieures à 0,1 mole/l nuisent simplement à l'économie et à la rentabilité du procédé.

Des concentrations en titane supérieures à 1,5 mole/l peuvent nuire au rendement de la réaction d'hydrolyse.

Pour des concentrations en titane aux environs de, ou supérieures à, 1,5 mole/l, il peut être alors avantageux de rajouter dans la solution de l'ammoniaque $NH_4OH$ dans un rapport molaire

$$\frac{[NH_3]}{[Ti]}$$

n'excédant pas de préférence 1,5, et ceci dans le but d'augmenter le rendement et/ou la cinétique de la réaction d'hydrolyse.

La concentration en composé B dans la solution initiale est comprise entre 0,002 mole/l et 0,5 mole par litre. D'une manière générale, on constate que des concentrations relativement faibles en composé B, c'est à dire des concentrations comprises entre 0,002 mole/l et 0,1 mole/l, suffisent à obtenir le résultat recherché.

La solution initiale ainsi obtenue est alors hydrolysée.

Cette hydrolyse est de préférence menée à une température supérieure ou égale à 70 °C. Des températures inférieures peuvent bien entendu être utilisées, mais dans ce cas la réaction d'hydrolyse est beaucoup plus longue, ce qui nuit évidemment à l'économie du procédé.

A l'issue de la réaction, on récupère le solide formé, notamment par filtration.

Le solide ainsi récupéré peut alors être lavé, à l'eau par exemple, pour éliminer les éventuelles impuretés restantes, puis séché.

L'analyse par diffraction X montre que le produit ainsi obtenu est de l'oxyde de titane $TiO_2$ présent essentiellement sous sa forme cristalline anatase.

On constate d'autre part que cet oxyde de titane peut sans problème être remis en suspension dans une solution aqueuse acidifiée de manière à former un sol parfaitement stable.

Sans vouloir limiter la présente invention à la théorie, il est probable que la structure anatase de l'oxyde de titane obtenu soit une des causes de sa bonne aptitude à la dispersion ; d'autre part, il semble bien que ce soit la présence d'un composé B tel que défini précédemment qui permette, lors de l'hydrolyse, d'orienter préférentiellement la cristallisation de l'oxyde de titane sous sa forme anatase.

Les poudres d'oxyde de titane issues du procédé selon l'invention peuvent alors trouver de nombreuses applications utiles.

L'une des plus intéressantes réside dans la préparation de matériaux, sous forme de poudres ou de pièces denses, à base de titanate d'alcalino-terreux de haute pureté pour l'industrie électronique.

Plus particulièrement, les poudres d'oxyde de titane obtenues selon le procédé de l'invention peuvent être utilisées à la préparation de poudres de titanates d'alcalino-terreux conformément à une technique telle que décrite dans la demande de

brevet français n° 2 551 743 citée ici à titre de référence.

Globalement, on prépare alors un sol d'oxyde de titane à partir de l'oxyde de titane issu du procédé selon l'invention, on mélange à ce sol une solution d'un nitrate d'alcalino-terreux, on opère ensuite le séchage de la suspension obtenue, le produit séché est calciné, puis enfin éventuellement broyé, ce qui permet de récupérer finalement une poudre de titanate d'alcalino-terreux très pure, notamment exempte de soufre.

Ces poudres peuvent alors elles-mêmes, par des procédés classiques de frittage, être utilisées à la préparation de pièces denses en titanate d'alcalino-terreux.

Des exemples concrets illustrant l'invention vont maintenant être donnés.

## EXEMPLE 1

A un litre de solution d'oxychlorure de titane contenant une mole de Ti, on ajoute 0,05 mole d'acide tartrique de formule

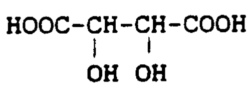

La solution est ensuite portée à ébullition et y est maintenue pendant 4 heures.

Après refroidissement, la solution est filtrée et le solide obtenu est lavé par un litre d'eau distillée, puis séché sous vide.

L'analyse par diffraction X indique que le produit obtenu est de l'oxyde de titane présent uniquement sous forme anatase.

Le solide lavé et non séché est remis en suspension dans de l'eau à raison de 10 % en poids de $TiO_2$. De l'acide nitrique est ajouté jusqu'à atteindre un pH de 1,0.

On obtient alors un sol parfaitement stable dont la taille des particules en suspension, mesurée par diffusion quasi-élastique de la lumière, est de 80 nanomètres, ces particules étant elles-mêmes constituées de cristallites de l'ordre de 5 nanomètres.

## EXEMPLE 2

A un litre de solution d'oxychlorure de titane contenant 0,5 mole de Ti, on ajoute 0,1 mole d'acide citrique de formule

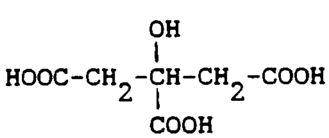

La solution ainsi obtenue subit le même traitement que dans l'exemple 1.

L'analyse par diffraction X indique que le solide obtenu est de l'oxyde de titane présent uniquement sous la forme anatase.

D'autre part, comme dans l'exemple 1, il est possible d'obtenir un sol de $TiO_2$ parfaitement stable.

## EXEMPLE 3

L'exemple 2 est répété dans les mêmes conditions, mais en remplacant l'acide citrique par de l'acide aspartique de formule :

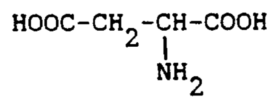

Là encore, le solide obtenu est de l'oxyde de titane sous forme anatase.

## EXEMPLE 4

L'exemple 2 est répété dans les mêmes conditions, mais en remplacant l'acide citrique par du glucoheptonate de sodium de formule :

$HO\text{-}CH_2\text{-}(CHOH)_5\text{-}COO\ Na$

Le solide obtenu est de l'oxyde de titane sous forme anatase.

## EXEMPLE 5

A un litre de solution d'oxychlorure de titane contenant une mole de Ti, ou ajoute 0,02 mole d'acide citrique. On ajoute également à cette solution des germes d'anatase à raison de 2 % en poids par rapport au $TiO_2$ total.

L'ensemble est porté à ébullition et y est maintenu pendant 6 heures. La solution est filtrée et le solide obtenu est lavé avec 2 litres d'eau distillée.

Une partie du solide est séchée sous vide.

L'analyse par diffraction X indique que ce solide est de l'oxyde de titane sous forme uniquement anatase.

L'autre partie du solide non séché est observée en microscopie électronique à transmission. On observe des particules très homogénes en taille ; leur taille moyenne est de 45 nanomètres.

## EXEMPLE COMPARATIF 6

On répète l'exemple 1 en omettant d'ajouter de l'acide tartrique.

Le solide lavé et non séché est remis en suspension à un pH de 1,0 : il décante spontanément. L'analyse par diffraction X indique qu'il est constitué d'oxyde de titane uniquement sous forme rutile.

EXEMPLE COMPARATIF 7

On répète l'exemple 2 en remplacant l'acide citrique par de l'acide oxalique qui est un acide dicarboxylique (HOOC-COOH), donc ne rentrant pas dans le cadre de la présente invention.

Le solide lavé et non séché est remis en suspension à un pH de 1,0 : il décante spontanément. L'analyse par diffraction X indique qu'il est constitué d'oxyde de titane uniquement sous forme rutile.

## Revendications

1. Procédé de préparation d'oxyde de titane sous forme anatase, comprenant l'hydrolyse d'une solution contenant un composé du titane (composé A) puis la récupération dudit oxyde de titane sous forme anatase après séparation du milieu d'hydrolyse, caractérisé en ce que ledit composé A est exempt de soufre, ladite hydrolyse est effectuée en présence d'au moins un composé B choisi parmi :
   (i) les acides qui présentent :
   - soit un groupement carboxyle et au moins deux groupements hydroxyles et/ou amines
   - soit au moins deux groupements carboxyles et au moins un groupement hydroxyle et/ou amine

   (ii) les sels des acides cités sous (i) ;
   et en ce qu'on opére l'hydrolyse avec une concentration molaire en composé B comprise entre 0,002 et 0,5 mole/litre.

2. Procédé selon la revendication 1 caractérisé en ce que ledit composé A est choisi parmi les halogénures, les oxyhalogénures, les nitrates et les alcoxydes de titane.

3. Procédé selon la revendication 2 caractérisé en ce que ledit composé A est un halogénure de titane ou un oxyhalogénure de titane.

4. Procédé, selon la revendication 3 caractérisé en ce que ledit composé A est un oxyhalogénure de titane.

5. Procédé selon la revendication 4 caractérisé en ce que ledit composé A est l'oxychlorure de titane.

6. Procédé selon l'une quelconque des revendications précédentes caractérisé en ce que ledit composé B est un composé hydrocarboné de type aliphatique.

7. Procédé selon la revendication 6 caractérisé en ce que la chaine principale hydrocarbonée du composé B n'excède pas 15 atomes de carbone.

8. Procédé selon la revendication 7 caractérisé en ce que ladite chaine n'excède pas 10 atomes de carbone.

9. Procédé selon l'une quelconque des revendications précédentes caractérisé en ce que l'on opère l'hydrolyse avec une concentration molaire en titane comprise entre 0,1 et 1,5 mole/litre.

10. Procédé selon l'une des revendications précédentes caractérisé en ce qu'on opère l'hydrolyse avec une concentration molaire en composé B comprise entre 0,002 et 0,1 mole/litre.

11. Procédé selon l'une quelconque des revendications précédentes caractérisé en ce que l'hydrolyse s'effectue en outre en présence d'ammoniaque.

12. Procédé selon la revendication 11 caractérisé en ce que l'ammoniaque est présent en quantité telle que le rapport molaire [NH3]/[Ti] n'excède pas 1,5.

13. Procédé selon l'une quelconque des revendications précédentes caractérisé en ce que ladite hydrolyse est effectuée à une température supérieure ou égale à 70 ° C.

14. Procédé de préparation de titanate d'alcalino-terreux, comprenant le mélange d'un sol d'oxyde de titane avec une solution d'un nitrate d'alcalino-terreux, le séchage du mélange obtenu puis la calcination du produit séché et enfin éventuellement le broyage du produit calciné, caractérisé en ce que ledit sol d'oxyde de titane est préparé à partir d'un oxyde de titane obtenu par un procédé tel que défini à l'une quelconque des revendications 1 à 13.

## Claims

1. Process for the preparation of titanium oxide in anatase form, comprising the hydrolysis of a solution containing a titanium compound (compound A) followed by the recovery of the said titanium oxide in anatase form after separation from the hydrolysis medium, characterized in that the said compound A is free from sulphur,

the said hydrolysis is carried out in the presence of at least one compound B chosen from:

(i) the acids which contain:

- either a carboxyl group and at least two hydroxyl and/or amine groups
- or at least two carboxyl groups and at least one hydroxyl and/or amine group

(ii) the salts of the acids mentioned under (i);

and in that the hydrolysis is carried out with a molar concentration of compound B of between 0.002 and 0.5 mole/litre.

**2.** Process according to Claim 1, characterized in that the said compound A is chosen from titanium halides, oxyhalides, nitrates and alkoxides.

**3.** Process according to Claim 2, characterized in that the said compound A is a titanium halide or a titanium oxyhalide.

**4.** Process according to Claim 3, characterized in that the said compound A is a titanium oxyhalide.

**5.** Process according to Claim 4, characterized in that the said compound A is titanium oxychloride.

**6.** Process according to any one of the preceding claims, characterized in that the said compound B is a hydrocarbon compound of aliphatic type.

**7.** Process according to Claim 6, characterized in that the main hydrocarbon chain of the compound B does not exceed 15 carbon atoms.

**8.** Process according to Claim 7, characterized in that the said chain does not exceed 10 carbon atoms.

**9.** Process according to any one of the preceding claims, characterized in that the hydrolysis is performed with a molar titanium concentration of between 0.1 and 1.5 moles/litre.

**10.** Process according to one of the preceding claims, characterized in that the hydrolysis is performed with a molar concentration of compound B of between 0.002 and 0.1 mole/litre.

**11.** Process according to one of the preceding Claims, characterized in that the hydrolysis is carried out additionally in the presence of aqueous ammonia.

**12.** Process according to Claim 11, characterized in that the aqueous ammonia is present in such quantity that the molar ratio $[NH_3]/[Ti]$ does not exceed 1.5.

**13.** Process according to any one of the preceding claims, characterized in that the said hydrolysis is carried out at a temperature above or equal to 70 °C.

**14.** Process for the preparation of alkaline-earth metal titanate, comprising the mixing of a titanium oxide sol with a solution of an alkaline-earth metal nitrate, the drying of the mixture obtained followed by the calcining of the dried product and lastly, if desired, the grinding of the calcined product, characterized in that the said titanium oxide sol is prepared from a titanium oxide obtained by a process such as defined in any one of Claims 1 to 13.

**Patentansprüche**

**1.** Verfahren zur Herstellung von Titanoxid der Form Anatas, welches umfaßt, eine Lösung, welche eine Titanverbindung (Verbindung A) enthält, zu hydrolysieren und daraufhin das Titanoxid der Form Anatas nach Abtrennen des Hydrolysemediums zu gewinnen,
dadurch gekennzeichnet,
daß die Verbindung A keinen Schwefel enthält und die Hydrolyse In Anwesenheit mindestens elner Verbindung B ausgeführt wird, welche ausgewählt ist aus:

(I) Säuren, welche aufweisen:

- entweder eine Carboxylgruppe und mindestens zwei Hydroxyl- und/oder Aminogruppen
- oder mindestens zwei Carboxylgruppen und mindestens eine Hydroxyl- und/oder Aminogruppe;

(II) Salzen der unter (I) aufgeführten Säuren;
und daß die Hydrolyse mit einer molaren Konzentration zwischen 0,002 und 0,5 mol/l an Verbindung B ausgeführt wird.

**2.** Verfahren nach Anspruch 1,
dadurch gekennzeichnet, daß die Verbindung A aus Halogeniden, Oxyhalogeniden, Nitraten und Alkoxiden von Titan ausgewählt wird.

**3.** Verfahren nach Anspruch 2,
dadurch gekennzeichnet, daß die Verbindung A ein Titanhalogenid oder ein Titanoxyhalogenid ist.

**4.** Verfahren nach Anspruch 3,
dadurch gekennzeichnet, daß die Verbindung

A ein Titanoxyhalogenid ist.

5. Verfahren nach Anspruch 4, dadurch gekennzeichnet, daß die Verbindung A Titanoxychlorid ist.

6. Verfahren nach irgendeinem der vorangegangenen Ansprüche, dadurch gekennzeichnet, daß die Verbindung B eine aliphatische Kohlenwasserstoffverbindung ist.

7. Verfahren nach Anspruch 6, dadurch gekennzeichnet, daß die Kohlenwasserstoff-Hauptkette der Verbindung B nicht mehr als 15 Kohlenstoffatome umfaßt.

8. Verfahren nach Anspruch 7, dadurch gekennzeichnet, daß die Kette nicht mehr als 10 Kohlenstoffatome umfaßt.

9. Verfahren nach irgendeinem der vorangegangenen Ansprüche, dadurch gekennzeichnet, daß die Hydrolyse mit einer molaren Konzentration zwischen 0,1 und 1,5 mol/l an Titan ausgeführt wird.

10. Verfahren nach irgendeinem der vorangegangenen Ansprüche, dadurch gekennzeichnet, daß die Hydrolyse mit eine molaren Konzentration zwischen 0,002 und 0,1 mol/l an Verbindung B ausgeführt wird.

11. Verfahren nach irgendeinem der vorangegangenen Ansprüche, dadurch gekennzeichnet, daß die Hydrolyse darüber hinaus in Gegenwart von Ammoniak ausgeführt wird.

12. Verfahren nach Anspruch 11, dadurch gekennzeichnet, daß Ammoniak in einer solchen Menge anwesend ist, daß das molare Verhältnis $[NH_3]/[Ti]$ 1,5 nicht überschreitet.

13. Verfahren nach irgendeinem der vorangegangenen Ansprüche, dadurch gekennzeichnet, daß die Hydrolyse bei einer Temperatur höher als oder gleich 70 °C ausgeführt wird.

14. Verfahren zur Herstellung eines Erdalkalititanats, welches umfaßt, ein Titanoxid-Sol mit eine Lösung eines Erdalkalinitrats zu vermischen, die erhaltene Mischung zu trocknen, dann das getrocknete Produkt zu kalzinieren und schließlich das kalzinierte Produkt gegebenenfalls zu zerkleinern, dadurch gekennzeichnet, daß das Titanoxid-Sol hergestellt wird ausgehend von einem Titanoxid, welches nach einem Verfahren, welches in irgendeinem der Ansprüche 1 bis 13 definiert worden ist, erhalten wurde.